# EUROPÄISCHE PATENTANMELDUNG

(11) **EP 0 992 870 A2**
(43) Veröffentlichungstag der Anmeldung: **12.04.2000**
(21) Anmeldenummer: 99116016.9
(22) Anmeldetag: 14.08.1999
(51) Int. Cl.: G05F 1/66, H02P 13/06

(54) **Vorrichtung zur Leistungseinstellung**

(30) Priorität: 19.08.1998 DE 19837659
(71) Anmelder: Agfa-Gevaert AG, 51373 Leverkusen (DE)
(72) Erfinder: Hofmuth, Walter, 80469 München (DE); Schuster, Rainer, 82291 Mammendorf (DE)

(57) **Zusammenfassung**

Es wird eine Vorrichtung (1) zur Einstellung einer von einem Verbraucher (25) abgegebenen Leistung vorgeschlagen, die einen Transformator (2) aufweist, der an seiner Primärseite (3) zwischen zwei Netzanzapfungen (5, 6) für ein Anlegen einer Netzspannung (U_{N}) weitere Anzapfungen (7 bis 14) hat, an die der Verbraucher (25) mit einem Schaltmittel (15) angeschaltet werden kann. Die Vorrichtung (1) hat weiterhin ein Steuermittel (23), mit dem das Schaltmittel (15) in Abhängigkeit von einem vorgebbaren Leistungssollwert so ansteuerbar ist, daß der Verbraucher (25) mit einer der weiteren Anzapfungen (7 bis 14) des Transformators (2) verbunden wird. Auf diese Weise ist der Verbraucher (1) zur Einstellung der von ihm abzugebenden Leistung ständig an die Spannungsversorgung (U_{N}) geschaltet, und muß nur bei einer Veränderung des Leistungssollwertes kurzzeitig von der Spannungsversorgung (U_{N}) getrennt werden, um ihn an eine andere der weiteren Anzapfungen (7 bis 14) anzuschalten. Dadurch können Flickererscheinungen und Oberwellen beim Betrieb des Verbrauchers mit einfachen technischen Mitteln gering gehalten werden.

## Beschreibung

Die vorliegende Erfindung betrifft eine Vorrichtung zur Einstellung einer beim Betrieb eines Verbrauchers von diesem abgegebenen Leistung.

Verbraucher, die über ein herkömmliches Stromversorgungsnetz mit einer fest vorgegebenen Netzspannung versorgt werden, benötigen eine Vorrichtung zur Einstellung einer Leistung, die im Betrieb von dem Verbraucher abgegeben werden soll, wenn diese Leistung je nach Anwendungsfall des Verbrauchers unterschiedlich eingestellt werden soll. Würde der Verbraucher ohne eine solche Vorrichtung mit der Netzspannung versorgt werden, würde er immer die gleiche Leistung im Betrieb abgeben.

Als eine solche Leistungssteuerung kann eine sogenannte Impulspaketsteuerung eingesetzt werden, bei der der Verbraucher mit einer impulsförmigen Spannung versorgt wird. Die vom Verbraucher im Betrieb abgegebene Leistung wird bestimmt durch das Verhältnis der Anzahl der Halbperioden, in denen die Impulse einen hohen Pegel haben, zu der Anzahl der Halbperioden, in denen die Impulse einen niedrigen Pegel haben. Um beispielsweise eine Leistung von 10 % der Maximalleistung einzustellen, wird der Verbraucher eine Halbperiode mit hohem Pegel und neun Halbperioden mit niedrigem Pegel angesteuert. Bei dieser Art der Leistungssteuerung wird der Verbraucher ständig an das Versorgungsnetz an- und anschließend - entsprechend der einzustellenden Leistung - wieder vom Versorgungsnetz abgeschaltet. Dadurch werden Oberwellen und Flicker erzeugt, da insbesondere Verbraucher mit Kaltleitereigenschaften, die also beim Einschalten einen verhältnismäßig hohen Strom aus dem Netz ziehen, einen kurzzeitigen Einbruch der Versorgungsspannung bewirken. Dieser ist abhängig von der Schaltfrequenz der Leistungssteuerung. Je höher diese Schaltfrequenz ist, d.h. je häufiger der Verbraucher ein- und ausgeschaltet wird, umso geringer sollte der kurzzeitige Versorgungsspannungsabfall sein, um die Flicker- und Oberwellenproblematik gering zu halten. Durch den so leistungsgesteuerten Verbraucher wird Flicker erzeugt, der zu leitungsgebundenen Störungen führt, durch die andere Verbraucher, die an das gleiche Versorgungsnetz wie der leistungsgesteuerten Verbraucher angeschlossen sind, in ihrer Funktion negativ beeinflußt werden, da sie Leistungsschwankungen unterworfen sind. Die Flicker- und Oberwellenproblematik ist in sogenannten DIN-Normen weiter beschrieben, die vom VDE-Verlag GmbH, 10625 Berlin, herausgegeben werden. Die DIN-Norm EN-61000-3-3 behandelt Vorschriften für die Erzeugung von Flicker und die DIN-Norm EN-61000-3-2 beschreibt Vorschriften für die Erzeugung von Oberwellen durch am Versorgungsnetz betriebene Verbraucher.

Der hier vorliegenden Erfindung liegt daher die Aufgabe zugrunde, eine Vorrichtung zur Einstellung einer beim Betrieb eines Verbrauchers von diesem abgegebenen Leistung anzugeben, mit der das Auftreten von Flicker und Oberwellen mit einfachen technischen Mitteln gering gehalten werden kann.

Diese Aufgabe wird gemäß der technischen Lehre des Anspruchs 1 oder des Anspruchs 8 gelöst.

Aufgrund der Erfindung ist es vorteilhafterweise möglich, die erfindungsgemäße Vorrichtung zur Einstellung der Leistung mit einfachen und kostengünstigen Komponenten zu realisieren, die problemlos beherrschbar sind und zuverlässig arbeiten. Durch die Anzahl der weiteren Anzapfungen an der Primärseite des Transformators wird die Anzahl der mit der erfindungsgemäßen Vorrichtung einstellbaren Leistungsstufen des Verbrauchers festgelegt.

Vor allem bei Vorrichtungen für medizinischen Anwendungen sind besonders hohe Anforderungen an die Flicker- und Oberwellenerzeugung zu stellen, da solche Vorrichtungen überwiegend in Einrichtungen, wie z.B. Krankenhäusern oder Arztpraxen, eingesetzt werden, in denen kranke, und damit sicht- und hörempfindliche, Patienten mit den negativen Auswirkungen von Flicker und Oberwellen auf Verbraucher in ihrem Umkreis belastet werden. So können beispielsweise Leistungsschwankungen von Leuchtmitteln von den Patienten als sehr unangenehm empfunden werden. Darüber hinaus können z.B. Helligkeitsschwankungen von Leuchtmitteln, die von Ärzten zum Betrachten von Röntgenfilm verwendet werden, zu fehlerhaften Darstellungen der aufgenommenen Objekte auf dem Film und zu Fehldiagnosen durch den behandelnden Arzt führen. Die erfindungsgemäße Vorrichtung zur Einstellung einer beim Betrieb eines Verbrauchers von diesem abgegebenen Leistung kann daher besonders vorteilhaft in einer Vorrichtung für medizinische Anwendungen, insbesondere in einer Vorrichtung zum Trocknen von Röntgenfilm, eingesetzt werden.

In einer vorteilhaften Ausgestaltung wird das Steuermittel der erfindungsgemäßen Vorrichtung mit der Sekundärseite des Transformators verbunden. Die Primär- und Sekundärwicklungen des Transformators können dabei so ausgelegt sein, daß das Steuermittel mittels der an der Sekundärseite des Transformators anliegenden Sekundärspannung versorgt wird. Vorteilhafterweise kann mittels der Sekundärwicklung des Transformators des weiteren ein Abbild der an der Primärseite des Transformators angelegten Netzspannung erzeugt werden. Der Betrag der an der Primärseite des Transformators anliegenden Netzspannung kann daher problemlos von dem Steuermittel erfaßt werden und zur Ansteuerung des Schaltmittels der erfindungsgemäßen Vorrichtung in Abhängigkeit von diesem erfaßten Netzspannungsbetrag verwendet werden.

In einer weiteren vorteilhaften Ausgestaltung ist das Schaltmittel aus mehreren Schaltern aufgebaut. Dadurch ist es möglich, einfache, handelsübliche und kostengünstige Schalter als Schaltmittel zu verwenden. Diese einzelnen Schalter können Umschaltkontakte haben, zwischen denen die jeweiligen Schalter umschaltbar sind. Dadurch kann der Ansteuerungsaufwand für das Ansteuern des Schaltmittels gering gehalten werden. In einer besonders vorteilhaften Ausgestaltung des Schaltmittels sind dessen einzelne Schalter kaskadenförmig miteinander verschaltet, so daß auf einfache Weise durch entsprechende Ansteuerung gewährleistet werden kann, daß ein Kurzschluß an der Primärseite des Transformators vermieden werden kann, wenn einer der Schalter eine Fehlfunktion aufweisen sollte. In diesem Fall könnte allenfalls eine falsche Leistungsstufe eingestellt werden.

Bei einer besonders einfachen und robusten Ausgestaltung der erfindungsgemäßen Vorrichtung werden als Schalter herkömmliche, handelsübliche Relais verwendet, die sehr kostengünstig erhältlich sind und deren Ansteuerung äußerst einfach realisiert werden kann. Außerdem erzeugen solche Relais relativ geringe Schaltverluste.

Im folgenden werden die Erfindung und ihre Vorteile anhand von Ausführungsbeispielen beschrieben.

Es zeigen:
- Fig. 1: ein erstes Ausführungsbeispiel der erfindungsgemäßen Vorrichtung mit einer Kaskadenschaltung von Schaltern des Schaltmittels und
- Fig. 2: ein zweites Ausführungsbeispiel der erfindungsgemäßen Vorrichtung mit einer direkten Anschaltung eines Verbrauchers mittels eines Schalters an die jeweiligen weiteren Anzapfungen der Primärseite des Transformators.

Im folgenden werden gleiche oder gleich wirkende Elemente der erfindungsgemäßen Vorrichtung gemäß der Ausführungsbeispiele durchweg mit gleichen Bezugszeichen versehen.

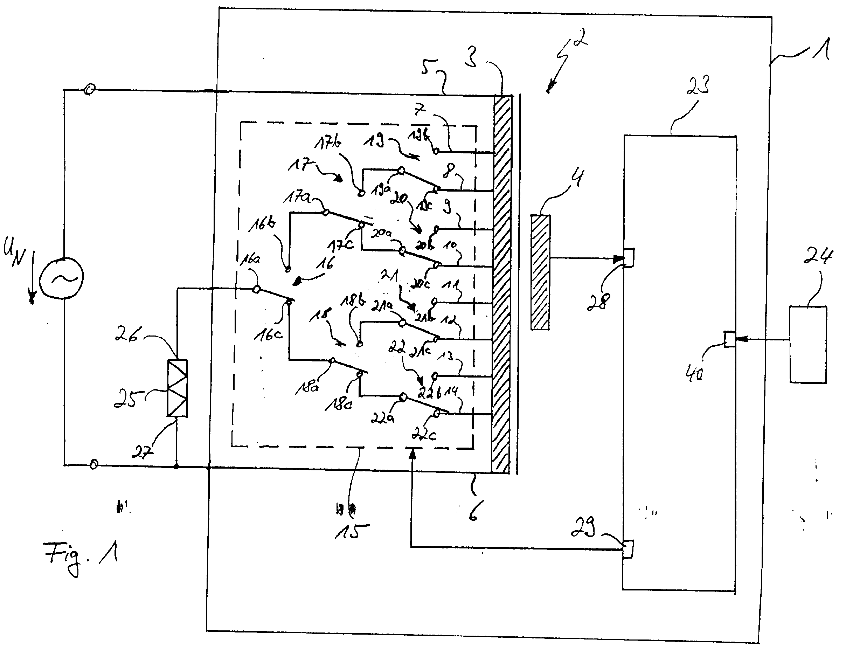

Fig. 1 zeigt ein erstes Ausführungsbeispiel einer erfindungsgemäßen Einstellvorrichtung 1 zum Einstellen einer beim Betrieb eines Verbrauchers 25 von diesem abgegebenen Leistung. Der Verbraucher 25 ist im vorliegenden Beispiel ein Infrarotstrahler, der zum Trocknen von durch verschiedene Chemikalienbäder transportiertem Röntgenfilm verwendet wird. Demzufolge ist die erfindungsgemäße Einstellvorrichtung 1 hier in einem Trockner zum Trocknen von Röntgenfilm eingesetzt. Es ist allerdings ebenso möglich, die erfindungsgemäße Einstellvorrichtung zum Einstellen der Leistung zu verwenden, die von anderen Verbrauchern als einem Infrarotstrahler abgegeben wird.

Die Einstellvorrichtung 1 weist einen Transformator 2 auf, der eine Primärwicklung 3 und eine Sekundärwicklung 4 hat. An der Primärwicklung sind zwei Netzanzapfungen 5 und 6 ausgebildet, über die die Primärwicklung an eine Netzspannung U_{N} angeschlossen ist. Zwischen diesen beiden Netzanzapfungen weist die Primärwicklung acht weitere Anzapfungen 7 bis 14 auf, die zum Einstellen der Leistungsstufe verwendet werden, in der der Verbraucher 25 betrieben werden soll. Diese acht weiteren Anzapfungen 7 bis 14 der Primärwicklung sind über ein Schaltmittel 15 mit einem ersten Versorgungsanschluß 26 des Verbrauchers 25 verbunden. Ein zweiter Versorgungsanschluß 27 des Verbrauchers 25 ist mit der Netzanzapfung 6 verbunden. Mit dem Schaltmittel 15 kann der Verbraucher 25 an eine der acht weiteren Anzapfungen 7 bis 14 der Primärwicklung angeschlossen werden.

Das Schaltmittel 15 besteht im vorliegenden ersten Ausführungsbeispiel gemäß der Fig. 1 aus sieben Schaltern 16 bis 22, die jeweils Umschaltkontakte aufweisen. Sie enthalten daher jeweils einen Eingang und zwei Ausgänge, wobei der Eingang des jeweiligen Schalters mit einem der beiden Ausgänge verbunden ist Der Schaltvorgang eines Schalters besteht also darin, die Verbindung des Eingangs mit einem der Ausgänge so zu verändern, daß nach dem Schalten der Eingang mit dem anderen Ausgang verbunden ist.

Im ersten Ausführungsbeispiel sind die Schalter 16 bis 22 kaskadenförmig angeordnet. Der erste Versorgungsanschluß 26 des Verbrauchers 25 ist daher mit einem Eingang 16a des ersten Schalters 16 verbunden. Ein erster Ausgang 16b des ersten Schalters 16 ist wiederum mit einem Eingang 17a des zweiten Schalters 17 und ein zweiter Ausgang 16c des ersten Schalters 16 mit einem Eingang 18a des dritten Schalters 18 verbunden. Ein erster Ausgang 17b des zweiten Schalters 17 ist mit einem Eingang 19a des vierten Schalters 19 und ein zweiter Ausgang 17c des zweiten Schalters mit einem Eingang 20a des fünften Schalters 20 verbunden. Ein erster Ausgang 18b des dritten Schalters 18 ist mit einem Eingang 21a des sechsten Schalters 21 und ein zweiter Ausgang 18c des dritten Schalters 18 mit einem Eingang 22a des siebten Schalters 22 verbunden. Ein erster Ausgang 19b des vierten Schalters 19 wiederum ist mit der Anzapfung 7, ein zweiter Ausgang 19c des vierten Schalters 19 mit der Anzapfung 8, ein erster Ausgang 20b des fünften Schalters 20 mit der Anzapfung 9, ein zweiter Ausgang 20c des fünften Schalters 20 mit der Anzapfung 10, ein erster Ausgang 21b des sechsten Schalters 21 mit der Anzapfung 11, ein zweiter Ausgang 21c des sechsten Schalters 21 mit der Anzapfung 12, ein erster Ausgang 22b des siebten Schalters 22 mit der Anzapfung 13 und ein zweiter Ausgang 22c des siebten Schalters 22 mit der Anzapfung 14 verbunden.

Auf diese Weise kann der Verbraucher 25 über ein dreistufiges Schaltmittel mit einer der Anzapfungen 7 bis 14 der Primärwicklung 3 des Transformators 2 verbunden werden. Die erste Stufe des Schaltmittels 15 besteht daher aus dem ersten Schalter 16, die zweite Stufe aus den beiden Schaltern 17 und 18 und die dritte Stufe aus den Schaltern 19 bis 22.

Im vorliegenden ersten Ausführungsbeispiel ist der Verbraucher 25 mit der Anzapfung 14 der Primärwicklung 3 verbunden. Dies wurde dadurch realisiert, daß in dem ersten Schalter 16, dem dritten Schalter 18 und dem siebten Schalter 22 der jeweilige Eingang 16a, 18a bzw. 22a mit dem jeweiligen zweiten Ausgang 16c, 18c bzw. 22c verbunden ist. Dadurch ergibt sich eine durchgehende Verbindung von dem ersten Versorgungsanschluß 26 des Verbrauchers 25 zu der Anzapfung 14 der Primärwicklung 3. Die Stellung der restlichen Schalter ist für die Spannungsversorgung des Verbrauchers 25 bei dieser Einstellung nicht relevant.

Die Einstellvorrichtung 1 enthält weiterhin ein Steuermittel 23, das mittels eines Mikroprozessors realisiert sein kann. Die Spannungsversorgung des Steuermittels 23 kann beispielsweise über die Sekundärwicklung 4 des Transformators 2 realisiert werden. Ein zusätzlicher Transformator für die Versorgung des Steuermittels ist daher vorteilhafterweise nicht notwendig, da auch bereits durch den Transformator 2 eine Potentialtrennung für die Versorgung der Steuerelektronik gewährleistet ist.

Des weiteren kann über die Sekundärwicklung 4 des Transformators direkt ein Abbild der Netzspannung U_{N} gemessen werden. Zur Bestimmung des Betrages der Netzspannung U_{N} ist daher ein Eingang 28 des Steuermittels 23 mit der Sekundärwicklung 4 verbunden. An diesem Eingang 28 wird das heruntertransformierte Abbild der Netzspannung U_{N} in das Steuermittel 23 eingespeist.

Das Steuermittel 23 weist einen weiteren Eingang 40 auf, der mit einem Eingabemittel 24 verbunden ist. Über dieses Eingabemittel 24 kann ein Leistungssollwert eingegeben werden, der zur Vorgabe der Leistung dient, die von dem Verbraucher 25 im Betrieb abgegeben werden soll. Das Eingabemittel 24 kann beispielsweise eine Tastatur sein. Es ist aber ebenso möglich, die Einstellung des Leistungssollwertes automatisch vorzugeben, beispielsweise in Abhängigkeit vom Trockengrad des mittels des Infrarotstrahlers 25 zu trocknenden Röntgenfilmes.

Das Steuermittel 23 hat des weiteren einen Ausgang 29, der mit dem Schaltmitteil 15 verbunden ist. An diesem Ausgang 29 gibt das Steuermittel 23 Steuersignale aus zur Ansteuerung der verschiedenen Schalter 16 bis 22 des Schaltmittels 15. Mittels der am Ausgang 29 ausgegebenen Schaltsignale werden die jeweiligen Schaltpositionen der Schalter 16 bis 22 eingestellt, um dadurch den Verbraucher mit der gewünschten Anzapfung der Primärwicklung 3 zu verbinden.

Das Steuermittel 23 ist so ausgestaltet, daß die am Ausgang 29 auszugebenden Steuersignale für das Schaltmittel 15 in Abhängigkeit von der Vorgabe des Leistungssollwertes und dem Betrag der Netzspannung U_{N} festgelegt werden. Dadurch ist es möglich, die von dem Verbraucher 25 abgegebene Leistung im Rahmen der zur Verfügung stehenden Leistungsstufen weitgehend unabhängig von der jeweils angelegten Netzspannung U_{N} einzustellen, indem die Schalterstellungen der Schalter 16 bis 22 entsprechend eingestellt werden. Dadurch ist es beispielsweise auch möglich, kurzzeitige oder längerfristige Schwankungen der Netzspannung U_{N} auszugleichen. Des weiteren ist es nicht mehr notwendig, vor der Inbetriebnahme feste Voreinstellungen in dem Trockner zum Trocknen von Röntgenfilm vorzunehmen, um dadurch den Betrieb des Verbrauchers 25 auf diejenige Netzspannung einzustellen, die in dem Stromversorgungsnetz des Landes vorhanden ist, in dem die erfindungsgemäße Vorrichtung zusammen mit dem Verbraucher 25 aufgestellt werden soll. Vielmehr kann die jeweilige Netzspannung des Landes von der erfindungsgemäßen Einstellvorrichtung 1 automatisch bestimmt werden und der Betrieb des Verbrauchers durch Verbinden der passenden Anzapfung des Transformators mit dem Verbraucher im Rahmen der einstellbaren unterschiedlichen Leistungsstufen auf die Netzspannung angepaßt werden.

Gemäß der Ausbildung der erfindungsgemäßen Einstellvorrichtung ist der Verbraucher 25 im Betrieb ständig ans Versorgungsnetz geschaltet. Nur dann, wenn die von dem Verbraucher abzugebende Leistung geändert wird oder wenn sich der Betrag der Netzspannung U_{N} geändert hat, werden die Schalter 16 bis 22 entsprechend der Vorgabe des Leistungssollwertes bzw. der Änderung der Netzspannung U_{N} umgeschaltet. Dadurch entsteht zwar ein kurzzeitiger Spannungsabfall. Dieser ist allerdings für die Entstehung von Flicker und Oberwellen nur unwesentlich, da im Normalbetrieb des Infrarotstrahlers 25 relativ selten umgeschaltet werden muß.

**Tabelle**

| Anzapfung | Trafospannung (V) | Leistung (W) | Strom (A) | Schalter 19 | Schalter 20 | Schalter 21 | Schalter 22 | Schalter 17 | Schalter 18 | Schalter 16 |
|---|---|---|---|---|---|---|---|---|---|---|
| 14 | 70 V | 143,5 | 2,1 | 0 | 0 | 0 | 0 | 0 | 0 | 0 |
| 13 | 100 V | 241 | 2,4 | 0 | 0 | 0 | 1 | 0 | 0 | 0 |
| 12 | 125 V | 331 | 2,65 | 0 | 0 | 0 | 0 | 0 | 1 | 0 |
| 11 | 145 V | 413 | 2,85 | 0 | 0 | 1 | 0 | 0 | 1 | 0 |
| 10 | 160 V | 480 | 3 | 0 | 0 | 0 | 0 | 0 | 0 | 1 |
| 9 | 175 V | 551 | 3,15 | 0 | 1 | 0 | 0 | 0 | 0 | 1 |
| 8 | 190 V | 627 | 3,3 | 0 | 0 | 0 | 0 | 1 | 0 | 1 |
| 7 | 205 V | 707 | 3,45 | 1 | 0 | 0 | 0 | 1 | 0 | 1 |

Die Tabelle zeigt ein Beispiel, wie die sieben Schalter 16 bis 22 eingestellt werden können, um eine Leistungseinstellung des Verbrauchers 25 mit acht unterschiedlichen Leistungsstufen durchzuführen. Dabei wird von einer Netzspannung U_{N} = 230 V ausgegangen. Unter der Überschrift 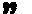 Trafospannung" sind die an den Anzapfungen 7 bis 14 jeweils anliegenden Spannungen bei einer Netzspannung U_{N} von 230 V aufgeführt. Unter der Überschrift 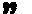 Leistung" wird diejenige Leistung angegeben, die von dem Verbraucher 25 abgegeben würde, wenn er mit der jeweiligen zugeordneten Anzapfung 7 bis 14 verbunden wird. Unter der Überschrift 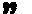 Strom" wird der dann durch den Verbraucher fließende jeweilige Strom angegeben. Mit 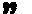 0" oder 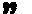 1" wird die jeweilige Schalterstellung der Schalter 16 bis 22 angegeben. 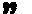 0" bedeutet dabei, daß der Eingang des jeweiligen Schalters mit seinem zweiten Ausgang verbunden ist und 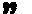 1" bedeutet, daß der Eingang des jeweiligen Schalters mit seinem ersten Ausgang verbunden ist.

Wird der Verbraucher 25 also bei der nominellen Netzspannung von 230 V mit einem vorgegebenen Leistungssollwert betrieben, der einer an dem Verbraucher 25 anliegenden Spannung von 145 V entspricht, so ist das Schaltmittel 15 so zu schalten, daß der erste Versorgungsanschluß 26 des Verbrauchers 25 mit der Anzapfung 11 der Primärwicklung 3 verbunden wird. Dazu ist es notwendig, den ersten Schalter in den 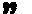 0"-Zustand zu bringen, d. h. der Eingang 16a ist mit dem zweiten Ausgang 16c verbunden. Des weiteren muß der dritte Schalter 18 in einen 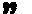 1"-Zustand gebracht werden, in dem der Eingang 18a des dritten Schalters 18 mit seinem ersten Ausgang 18b verbunden wird. Um die Verbindung zu der Anzapfung 11 herzustellen, ist nun noch der sechste Schalter 21 ebenfalls in einen 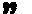 1"-Zustand gebracht, d. h. der Eingang 21a ist mit dem ersten Ausgang 21b verbunden. Entsprechende Steuersignale wurden von dem Steuermittel 23 über dessen Ausgang 29 an das Schaltmittel 15 übermittelt.

Sinkt nun die Netzspannung U_{N} um 10 %, dann sinkt auch die Spannung, die an dem Verbraucher 25 anliegt, um 10 %, d. h. der Verbraucher 25 wird mit einer Spannung von 145 V - 10 % = 130,5 V versorgt. Diese Spannungsänderung wird von dem Steuermittel 23 erkannt. Es erkennt, daß der Verbraucher mit der nächstniedrigeren Anzapfung 10 verbunden werden muß, um den vorgegebenen Leistungssollwert möglichst genau einzustellen. Wird der Verbraucher 25 mit der Anzapfung 10 verbunden, so würde bei Anliegen einer Netzspannung von 230 V gemäß der Tabelle an dem Verbraucher 25 eine Spannung von 160 V anliegen. Da allerdings die Netzspannung um 10 % gesunken ist, liegt daher an der Anzapfung 10 ebenfalls eine um 10 % reduzierte Spannung vor. Das heißt, bei Verbinden des Verbrauchers mit der Anzapfung 10 liegt an dem Verbraucher 25 eine Spannung von 160 V minus 10 % = 144 V an. Dadurch kann die vorgegebene Sollspannung von 145 V relativ exakt wieder eingestellt werden, so daß der Verbraucher 25 in der Lage ist, den vorgegebenen Leistungssollwert nur mit geringen Abweichungen abzugeben.

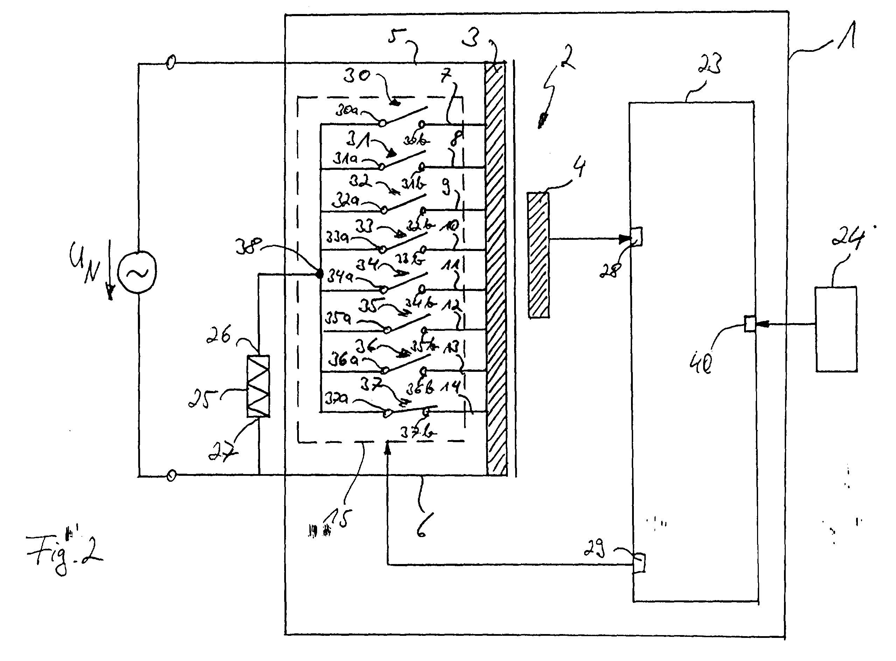

Fig. 2 zeigt ein zweites Ausführungsbeispiel der vorliegenden Erfindung, in dem anstelle der kaskadenförmigen Verschaltung der Schalter des Schaltmittels 15 nunmehr jede Anzapfung 7 bis 14 der Primärwicklung 3 des Transformators 2 mit einem eigenen Schalter verbunden ist, der offen oder geschlossen sein kann. Jeder dieser Schalter ist direkt mit dem ersten Versorgungsanschluß 26 des Verbrauchers 25 verbunden. Die Eingänge der jeweiligen Schalter stellen daher einen gemeinsamen Eingangsanschluß 38 des Schaltmittels 15 dar.

Der Verbraucher 25 ist über seinen ersten Versorgungsanschluß 26 mit diesem Eingangsanschluß 38 des Schaltmittels 15 verbunden. Der Eingangsanschluß 38 wiederum ist mit einem Eingang 30a eines ersten Schalters 30, mit einem Eingang 31a eines zweiten Schalters 31, einem Eingang 32a eines dritten Schalters 32, einem Eingang 33a eines vierten Schalters 33, einem Eingang 34a eines fünften Schalters 34, einem Eingang 35a eines sechsten Schalters 35, einem Eingang 36a eines siebten Schalters 36 und einem Eingang 37a eines achten Schalters 37 verbunden. Jeder dieser Schalter 30 bis 37 weist einen Ausgang auf der mit einer der Anzapfungen 7 bis 14 verbunden ist. So ist im vorliegenden Ausführungsbeispiel der Ausgang 30b des ersten Schalters 30 mit der Anzapfung 7, der Ausgang 31b des zweiten Schalters 31 mit der Anzapfung 8, der Ausgang 32b des dritten Schalters 32 mit der Anzapfung 9, der Ausgang 33b des vierten Schalters 33 mit der Anzapfung 10, der Ausgang 34b des fünften Schalters 34 mit der Anzapfung 11, der Ausgang 35b des sechsten Schalters 35 mit der Anzapfung 12, der Ausgang 36b des siebten Schalters 36 mit der Anzapfung 13 und der Ausgang 37b des achten Schalters 37 mit der Anzapfung 14 verbunden.

Im zweiten Ausführungsbeispiel gemäß der Fig. 2 ist der Verbraucher 25 mit der Anzapfung 14 über den geschlossenen achten Schalter 37 verbunden. Alle anderen Schalter 30 bis 36 sind offen, d. h. es besteht keine Verbindung zwischen ihren jeweiligen Ein- und Ausgängen.

Soll nun durch entsprechende Änderung der von dem Steuermittel 23 an seinem Ausgang 29 ausgegebenen Steuersignale für die Ansteuerung des Schaltmittels 15 die Anzapfung geändert werden, mit der der Verbraucher 25 verbunden sein soll, so ist zu gewährleisten, daß zunächst der geschlossene Schalter geöffnet, bevor der neu zu schließende Schalter geschlossen wird. Beim Umschaltvorgang müssen daher Totzeiten eingehalten werden. Soll beispielsweise der Verbraucher 25, der gemäß Fig. 2 mit der Anzapfung 14 verbunden ist, aufgrund einer Netzspannungsschwankung mit der Anzapfung 11 verbunden werden, so ist zunächst der Schalter 37 zu öffnen und damit die Verbindung des Verbrauchers zu der Anzapfung 14 aufzuheben und anschließend - nach einer möglichst kurzen Unterbrechungszeit - der Schalter 34 zu schließen, so daß eine Verbindung des Verbrauchers 25 mit der Anzapfung 11 geschaffen wird. Durch die beim Umschaltvorgang einzuhaltende Totzeit wird gewährleistet, daß Kurzschlüsse an den Anzapfungen 7 bis 14 der Primärwicklung 3 vermieden werden.

Im übrigen sind auch andere Ausführungen des Schaltmittels 15 denkbar, um den Verbraucher 25 an die jeweiligen Anzapfungen 7 bis 14 der Primärwicklung 3 anzuschalten.

## Patentansprüche

1. Vorrichtung (1) zur Einstellung einer beim Betrieb eines Verbrauchers (25) von diesem abgegebenen Leistung mit
- einem Transformator (2), der an seiner Primärseite (3) zwei Netzanzapfungen (5, 6) für ein Anlegen einer Netzspannung (U_{N}) und zwischen diesen beiden Netzanzapfungen (5, 6) weitere Anzapfungen (7 bis 14) hat, wobei eine der Netzanzapfungen (5, 6) zum Anschließen eines ersten Versorgungsanschlusses (27) des Verbrauchers (25) ausgestaltet ist,
- einem Schaltmittel (15) mit einem ersten Anschluß (16a; 38) zum Anschließen eines zweiten Versorgungsanschlusses (26) des Verbrauchers (25) und zweiten Anschlüssen (19b, 19c, 20b, 20c, 21b, 21c, 22b, 22c; 30b, 31b, ..., 37b), die mit den weiteren Anzapfungen (7 bis 14) verbunden sind, wobei das Schaltmittel (15) so viele zweite Anschlüsse (19b, 19c, 20b, 20c, 21b, 21c, 22b, 22c; 30b, 31b, ..., 37b) und Schaltstufen aufweist, wie weitere Anzapfungen (7 bis 14) vorhanden sind, und
- einem Steuermittel (23), mit dem das Schaltmittel (15) in Abhängigkeit von einem vorgebbaren Leistungssollwert so ansteuerbar ist, daß der zweite Versorgungsanschluß (26) des Verbrauchers (25) mit einer der weiteren Anzapfungen (7 bis 14) verbunden wird.

2. Vorrichtung nach Anspruch 1, dadurch gekennzeichnet, daß das Steuermittel (23) mit der Sekundärseite (4) des Transformators (2) verbunden ist.

3. Vorrichtung nach Anspruch 1 oder 2, dadurch gekennzeichnet, daß das Steuermittel (23) so ausgestaltet ist, daß der Betrag einer an die beiden Netzanzapfungen (5, 6) angelegten Netzspannung (U_{N}) erfaßbar ist und das Schaltmittel (15) in Abhängigkeit von diesem erfaßten Netzspannungsbetrag angesteuert wird.

4. Vorrichtung nach einem der Ansprüche 1 bis 3, dadurch gekennzeichnet, daß das Schaltmittel (15) mehrere Schalter (16 bis 22; 30 bis 37) aufweist.

5. Vorrichtung nach Anspruch 4, dadurch gekennzeichnet, daß die Schalter (16 bis 22) Umschaltkontakte (19b, 19c, 20b, 20c, 21b, 21c, 22b, 22c) haben, zwischen denen die jeweiligen Schalter (16 bis 22) umschaltbar sind.

6. Vorrichtung nach Anspruch 4 oder 5, dadurch gekennzeichnet, daß die Schalter (16 bis 22) kaskadenförmig verschaltet sind.

7. Vorrichtung nach einem der Ansprüche 4 bis 6, dadurch gekennzeichnet, daß die Schalter (16 bis 22; 30 bis 37) Relais sind.

8. Vorrichtung für eine medizinische Anwendung mit einer Vorrichtung (1) nach einem der vorhergehenden Ansprüche.

9. Vorrichtung nach Anspruch 8, dadurch gekennzeichnet, daß die medizinische Vorrichtung eine Vorrichtung zum Trocknen von Röntgenfilm ist.
